# EUROPEAN PATENT SPECIFICATION

(11) **EP 4 435 280 B1**
(45) Date of publication and mention of the grant of the patent: **12.02.2025**
(21) Application number: 23000044.0
(22) Date of filing: 24.03.2023
(51) Int. Cl.: F16C 19/06, F16C 33/36, F16C 33/38, F16C 33/52, F16C 33/58

(54) **HARMONY BALL BEARING**
HARMONIE KUGELLAGER
HARMONIE ROULEMENT À BILLES

(43) Date of publication of application: 25.09.2024
(73) Proprietor: Alexandrou, Charis, 2368 Nicosia (CY)
(72) Inventor: Alexandrou, Charis, 2368 Nicosia (CY)

(56) References cited:
- DE-A1- 4 111 994
- DE-C- 209 688
- GB-A- 190 703 135

## Description

A ball bearing is the basis of the machine. It allows the various parts, shafts to rotate freely. Its uses are in machines, wheels generally shafts that rotate. Conventional bearings consist of balls placed to each other contained by an inner and outer rings, old bearing, prior art. A more recent bearing: the balls are contained in sockets of a cage do not touch each other but touch the sockets of the cage and the inner and outer rings, [5] prior art. There is a need for an efficient bearing that can withstand load. An efficient bearing means low fuel energy consumption, low noise, smooth running of the axle, shaft and thus of the machine, longer life of the ball bearing and of the machine, lower operational temperature of the ball bearing and low possibility of malfunction. A car is equipped with 100 to 150 ball bearings, almost every machine needs ball bearings and wheels have ball bearings. They are essential. The harmony ball bearing consists of parts that move in [10] agreement with each other. The balls that hold the load move freely.

In this invention the balls move freely. Their contact in front and on the rear are with rollers (cylinders) that move in harmony with the balls, in opposite circular direction with the balls. In other words, the balls move clockwise the rollers anti-clockwise. There is a ball then a roller then a ball and so on. That is the balls and the rollers are positioned alternately. The rollers rotate around axles. These axles are attached to a cage. A [15] cage with stands that extend and have contact with the rotating inner ring. Therefore, the cage rotates. The rollers are small in diameter than the balls so they do not touch either the inner ring or the stationary outer ring. They only touch their axles and the balls. Therefore, only the balls are in contact with the outer stationary ring and the inner ring moving in circular motion.

Conventional bearings consist of balls next to each other rotating in opposite directions thus they collide, or [20] they are in a cage which its sockets do not rotate in accordance with the rotating balls causing friction. They are not extremely efficient. The harmony ball bearing consists of rollers that are not in contact with the rotating inner ring 7 nor with the stationary supporting ring 6. They take movement from the balls 1 and their rotational movement agree with the movement of balls.

DE 41 11 994 A1 discloses a ball bearing with spacing rollers but uses a different kind of a cage.

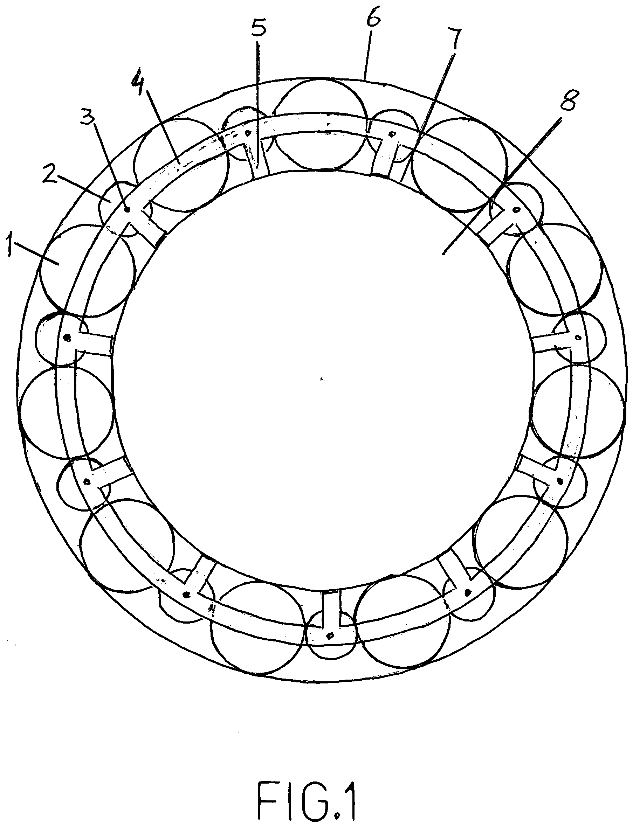

FIG.1 illustrates the rotating inner ring touching only the balls 1 causing the balls to move in opposite [25] direction than the inner ring. The balls touch the rollers 2 causing them to move in opposite direction than the balls. Therefore, all the rollers move in agreement with all the balls. What contains the balls and the rollers is the cage 4. The balls inside the cage move freely while the rollers are positioned around axles 3 that are fastened to the cage. As the shaft rotates it rotates the inner ring which rotates the balls and the cage. The cage rotates due two forces. The first is the rotating inner ring which touches the stands 5 of the [30] cage. The second is the balls that push the rollers in the direction of the rotating shaft. These two forces are in the same direction. The balls rotate the rollers.

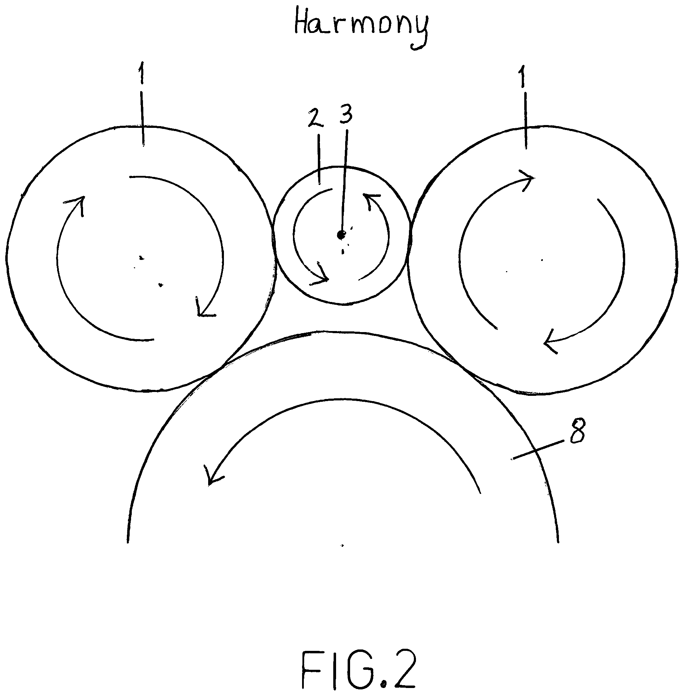

FIG. 2 demonstrates the movement of the balls 1, the rollers 2 and the shaft 8. They move in harmony. The shaft moves anti-clockwise, the balls clockwise and the roller anti-clockwise. The movement comes from the shaft the inner ring is attached to it and it moves the two balls. The balls 1 move the roller 2. The roller [35] rotates around an axle 3.

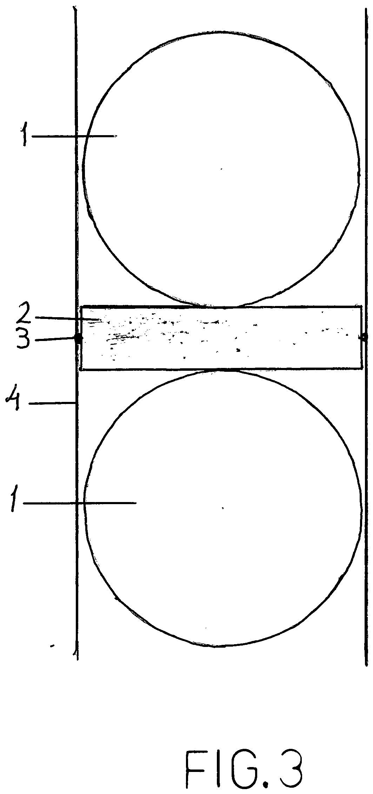

FIG. 3 is a view from the top showing 2 balls 1, the roller 2 rotating around the axle 3 which is attached to the cage 4. The walls of the cage in Fig. 3 the vertical lines are slightly wider than the contained balls for the balls to rotate freely without friction. The balls rotate rotating thus the roller 2. The balls should not fit tightly with the rollers because when the ball bearing works for a considerable time the temperature rises causing [40] the balls and the rollers to expand pushing each other and preventing the ball bearing from running smoothly.

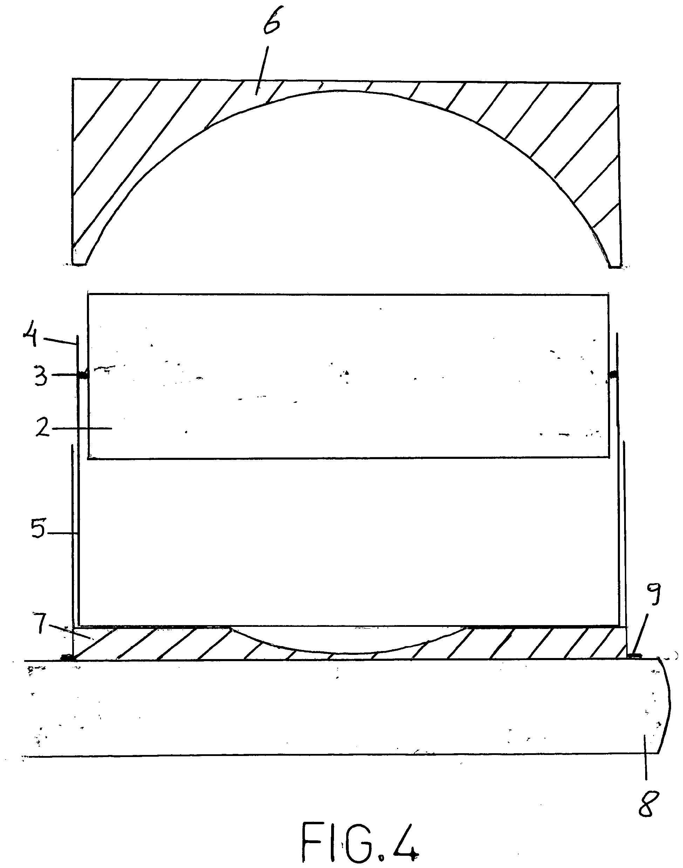

FIG. 4 is a longitudinal view of the ball bearing without the ball. The shaft 8 which rotates the inner ring 7 and are connected with a metal strip, attachment 9. Between the inner ring 7 and the stand of the cage 5 there is a tiny space which is the lubricant. There is the possibility that the cage 4 will move faster than the [45] balls thus the rollers 2 will touch the balls from [45] behind a lubricant will make this touch weak. The harmony ball bearing should initially be made without using lubricant and observe the relation between the cage and the balls. The ideal is the rollers not to touch the balls either in front or behind. If the rollers touch the balls from behind the number of stands 5 could be reduced. For example, not under every axle 3 should there be a stand but under numbers 1, 3, 5, 7, 9, 11 axles. At the top it is the stationary outer ring 6 which [50] holds the balls 1.

### Parts:

1, balls are placed between rollers they are larger than the rollers preventing the rollers to touch either the rotating inner ring or the stationary outer ring. The rollers touch only the balls. The balls should be made of steel and have such radius that do not touch the cage -the sides of the cage- or the rollers when stationary [55] reducing friction and give room for expansion from heat.
2, rollers should be made of steel. They are cylinders with a hole of the cross section. The radius of the hole should be half of the radius of the cylinder. The rollers should be slightly shorter in length than the distance between the 2 sides of the cage to avoid friction with the sides of the cage. The radius of the roller should not be either too small or too big. At first sight the size of the radius does not matter as far as friction is [60] concerned because Friction=µF. Where µ is the coefficient of friction and F is the force which pushes the roller to the axle. However, when the roller is small in radius it rotates with higher circular velocity. Higher circular velocity means more friction. A large roller rotates with lower circular velocity and suffers less friction. The drawback of a large roller is that the distance between the balls, which them alone hold the load, is big rendering the ball bearing incapable of holding heavy loads. Therefore, the radius of the roller [65] with the axle inside it should be 1/4 to 1/2 of the radius of the ball. The rollers are cylinders. They can be spherical like a ball or cones: two cones which their edges meet in the center resembling a water clock. If the rollers are spherical the balls 1 will either move left or right touching the sides of the cage. If the rollers are like cones the balls will push the cones (rollers) to the left or to the right thus the cones (rollers) will have friction with the [70] sides of the cage when they rotate.
3, axle is attached to the cage. A hole is made above the stand 5 and it is in the middle of the width of the circular ring of the cage as seen in fig. 1. The axle is inserted between the 2 holes of the 2 sides of the ring of the cage. The axle is made of steel. Here lubrication is vital between the axle and the roller which are in contact. The height of the axle is the radius of the ball 1 minus the curvature (if there is one) of the inner [75] ring 7, see fig. 4.
4, cage consists of two identical rings that are connected with the stands 5. They are rings with extensions, stands 5 below the holes of the axles 3.
5, stands are extensions, strips that start from the ring of the cage go down until they reach the inner ring then they turn 90 degrees going until they meet the strip from the other ring of the cage. The stands of the [80] cage touch the inner ring so there is the possibility of using lubricant. For the lubricant to not enter the stands, the stands should be U shaped as seen from the side letting the lubricant to pass under the stand and not above it. Also, U shaped stands reduce the friction between the stands and the inner ring. If the stand is flat and not U shaped it will touch the inner ring much more than if it was U shaped (semicircle).
6, the outer ring which is stationary and is fixed to the surrounding element. It is circular.
7, the inner ring which rotates with the same circular velocity as the shaft because it is attached to it by screws or ditches. It could be flat or with a curvature to hold the balls.
8, shaft the big rotating axle that is in contact with the inner ring of the ball bearing.
9, attachment of the inner ring to the rotating shaft by screw or ditch in fig. 4. This attachment is a metal strip, extension of the inner ring 7.

## Claims

1. A ball bearing comprising an inner ring (7), an outer ring (6), and balls (1) wherein in their front and back there are rollers (2). On left and right are contained by sides of a cage (4). The cage (4) is made of two rings which are connected by metal strips (5) which form rectangles without the top side. These metal strips form stands (5) of the cage (4), they hold the cage (4), they are part of the cage (4), and they sit on the inner ring (7). The inner ring (7) is attached to a rotating shaft (8) by a metal strip attachment (9) which is an extension of the inner ring (7) and is screwed to the shaft (8). The rollers (2) are cylinders which rotate around axles (3). These axles (3) pass through one hole of the cage through the hole of the roller (2) and through the hole of the other ring of the cage (4). The rollers are not in contact with either the inner ring (7) or the outer ring (6). The balls (1) are in contact with the rotating inner ring and the stationary outer ring (6) thus they receive rotation.

2. The ball bearing in accordance with claim 1, wherein the size of the radius of the roller (2) varies.

3. The ball bearing in accordance with claim 1, wherein the shape of the roller (2) is spherical like a ball.

4. The ball bearing in accordance with claim 1, wherein the shape of the roller is two cones which their edges are attached in center resembling a water clock.

5. The ball bearing in accordance with claim 1, wherein the stands (5) of the cage (4) where they touch the inner ring (7) are U shaped.

6. The ball bearing in accordance with claim 1, wherein the inner ring (7) is curved inside to hold the balls (1).

7. The ball bearing in accordance with claim 1, wherein the inner ring (7) is fastened to the shaft (8) by a ditch.

## Patentansprüche

1. Ein Kugellager, bestehend aus einem Innenring (7), einem Außenring (6) und Kugeln (1), an deren Vorder- und Rückseite sich Rollen (2) befinden. Links und rechts befinden sich seitlich jeweils ein Käfig (4). Der Käfig (4) besteht aus zwei Ringen, die durch Metallstreifen (5) verbunden sind, die Rechtecke ohne Oberseite bilden. Diese Metallstreifen bilden Ständer (5) des Käfigs (4), sie halten den Käfig (4), sie sind Teil des Käfigs (4) und sie sitzen auf dem Innenring (7). Der Innenring (7) ist über eine Metallstreifenbefestigung (9), die eine Verlängerung des Innenrings (7) darstellt und mit der Welle (8) verschraubt ist, an einer rotierenden Welle (8) befestigt. Die Rollen (2) sind Zylinder, die sich um Achsen (3) drehen. Diese Achsen (3) verlaufen durch ein Loch des Käfigs, durch das Loch der Rolle (2) und durch das Loch des anderen Rings des Käfigs (4). Die Rollen haben weder Kontakt zum Innenring (7) noch zum Außenring (6). Die Kugeln (1) stehen in Kontakt mit dem rotierenden Innenring und dem feststehenden Außenring (6) und erhalten somit Rotation.

2. Kugellager nach Anspruch 1, **dadurch gekennzeichnet, dass** die Größe des Radius der Rolle (2) variiert.

3. Kugellager nach Anspruch 1 oder 2, **dadurch gekennzeichnet, dass** die Form der Rolle (2) kugelförmig ist.

4. Kugellager nach Anspruch 1, wobei die Rolle die Form zweier Kegel hat, deren Kanten in der Mitte befestigt sind, ähnlich einer Wasseruhr.

5. Kugellager nach einem der Ansprüche 1 bis 4, **dadurch gekennzeichnet, dass** die Stege (5) des Käfigs (4) an der Kontaktstelle zum Innenring (7) U-förmig ausgebildet sind.

6. Kugellager nach einem der Ansprüche 1 bis 5, **dadurch gekennzeichnet, dass** der Innenring (7) zur Aufnahme der Kugeln (1) nach innen gewölbt ist.

7. Kugellager nach Anspruch 1, **dadurch gekennzeichnet, dass** der Innenring (7) durch einen Graben an der Welle (8) befestigt ist.

## Revendications

1. Roulement à billes comprenant une bague intérieure (7), une bague extérieure (6) et des billes (1) dans lesquelles se trouvent à l'avant et à l'arrière des rouleaux (2). A gauche et à droite sont contenus les côtés d'une cage (4). La cage (4) est constituée de deux anneaux reliés par des bandes métalliques (5) qui forment des rectangles sans la face supérieure. Ces bandes métalliques forment les supports (5) de la cage (4), elles maintiennent la cage (4), elles font partie de la cage (4), et elles reposent sur la bague intérieure (7). La bague intérieure (7) est fixée à un arbre rotatif (8) par une fixation en bande métallique (9) qui est une extension de la bague intérieure (7) et est vissée à l'arbre (8). Les rouleaux (2) sont des cylindres qui tournent autour d'essieux (3). Ces axes (3) passent par un trou de la cage par le trou du galet (2) et par le trou de l'autre anneau de la cage (4). Les rouleaux ne sont en contact ni avec la bague intérieure (7), ni avec la bague extérieure (6). Les billes (1) sont en contact avec la bague intérieure rotative et la bague extérieure fixe (6) et reçoivent donc une rotation.

2. Roulement à billes selon la revendication 1, dans lequel la taille du rayon du rouleau (2) varie.

3. Roulement à billes selon la revendication 1, **caractérisé en ce que** la forme du rouleau (2) est sphérique comme une bille.

4. Roulement à billes selon la revendication 1, dans lequel la forme du rouleau est constituée de deux cônes dont les bords sont fixés au centre ressemblant à une horloge à eau.

5. Roulement à billes selon la revendication 1, **caractérisé en ce que** les supports (5) de la cage (4) au niveau de leur contact avec la bague intérieure (7) sont en forme de U.

6. Roulement à billes selon la revendication 1, dans lequel la bague intérieure (7) est courbée vers l'intérieur pour maintenir les billes (1).

7. Roulement à billes selon la revendication 1, dans lequel la bague intérieure (7) est fixée à l'arbre (8) par un fossé.
